# FASCICULE DE BREVET EUROPEEN

(11) **EP 2 611 751 B1**
(45) Date de publication et mention de la délivrance du brevet: **26.11.2014**
(21) Numéro de dépôt: 11767277.4
(22) Date de dépôt: 29.08.2011
(51) Int. Cl.: C03C 25/26, C03C 25/42, C03C 25/32, C08J 5/08

(54) **COMPOSITION D'ENCOLLAGE POUR LAINE MINERALE COMPRENANT UN SUCRE NON REDUCTEUR ET UN SEL METALLIQUE D'ACIDE INORGANIQUE, ET PRODUITS ISOLANTS OBTENUS.**
ZUSAMMENSETZUNG EINER SCHLICHTE FÜR MINERALWOLLE MIT EINEM NICHTREDUZIERENDEN ZUCKER UND EINEM METALLSALZ AUS EINER ANORGANISCHEN SÄURE SOWIE GEWONNENE ISOLIERPRODUKTE
SIZING COMPOSITION FOR MINERAL WOOL COMPRISING A NON-REDUCING SUGAR AND AN INORGANIC ACID METAL SALT, AND INSULATING PRODUCTS OBTAINED

(30) Priorité: 30.08.2010 FR 1056851
(43) Date de publication de la demande: 10.07.2013
(73) Titulaire: Saint-Gobain Isover, 92400 Courbevoie (FR)
(72) Inventeur: OBERT, Edouard, F-60580 Coye La Foret (FR); JAFFRENNOU, Boris, F-75019 Paris (FR)
(74) Mandataire: Jamet, Vincent
(86) Numéro de dépôt international: PCT/FR2011/051973
(87) Numéro de publication internationale: WO 2012/028810

(56) Documents cités:
- WO-A1-2009/019235
- WO-A2-2007/014236
- FR-A1- 2 924 719

## Description

La présente invention se rapporte au domaine des produits d'isolation, thermiques et/ou acoustiques, à base de laine minérale, notamment de verre ou de roche, et d'un liant exempt de formaldéhyde.

L'invention concerne plus particulièrement une composition d'encollage apte à réticuler pour former ledit liant, qui renferme au moins un sucre non réducteur et au moins un sel métallique d'acide inorganique, le procédé de fabrication de produits d'isolation thermiques et/ou acoustiques et les produits d'isolation qui en résultent.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées vers un organe récepteur pour former une nappe de fibres (ou laine minérale).

La centrifugation externe consiste, elle, à déverser la matière en fusion à la surface périphérique externe d'organes rotatifs appelés rotors, d'où ladite matière est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, afin éviter la formation de chaînes longues peu hydrosolubles qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée (à son tour dégradée au moins partiellement en ammoniaque) qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues.

Une première solution se fonde sur l'emploi d'un polymère d'acide carboxylique, notamment d'acide acrylique.

Dans US 5 340 868, l'encollage comprend un polymère polycarboxylique, un β-hydroxylamide et un acide carboxylique monomérique au moins trifonctionnel.

D'autres compositions d'encollage ont été proposées qui comprennent un polymère polycarboxylique, un polyol et un catalyseur, lequel catalyseur pouvant être un composé contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Les compositions d'encollage à base d'un polymère polycarboxylique et d'un polyol peuvent en outre comprendre un tensioactif cationique, amphotère ou non ionique (US 2002/0188055), un agent de couplage de type silane (US 2004/0002567) ou une dextrine en tant que co-liant (US 2005/0215153).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Une deuxième solution de remplacement des résols se fonde sur l'association d'un saccharide et d'un acide polycarboxylique.

Dans US 5 895 804, il est décrit une composition adhésive à base de polysaccharides thermoréticulables pouvant être utilisée en tant qu'encollage pour de la laine minérale. La composition renferme un polymère polycarboxylique ayant au moins deux groupes fonctionnels acide carboxylique et un poids moléculaire au moins égal à 1000, et un polysaccharide ayant un poids moléculaire au moins égal à 10000.

Dans WO 2009/080938, la composition d'encollage comprend un monosaccharide et/ou un polysaccharide et un acide organique polycarboxylique de masse molaire inférieure à 1000.

On connaît également une composition d'encollage aqueuse sans formaldéhyde qui comprend un produit de réaction de Maillard, en particulier associant un sucre réducteur, un acide carboxylique et de l'ammoniaque (WO 2007/014236). Dans WO 2009/019232 et WO 2009/019235, il est proposé de substituer l'acide carboxylique par un précurseur d'acide dérivé d'un sel inorganique, notamment un sel d'ammonium qui présente l'avantage supplémentaire de pouvoir remplacer tout ou partie de l'ammoniaque.

Ces dernières compositions d'encollage contiennent néanmoins des composés renfermant de l'azote qui sont susceptibles de se dégrader, notamment en ammoniaque, au cours du traitement thermique mis en oeuvre pour que les fibres minérales puissent être liées entre elles et former le produit d'isolation final.

La présente invention a pour but de proposer une composition d'encollage pour des produits isolants à base de laine minérale, notamment de verre ou de roche, qui est exempte de formaldéhyde et de composés azotés. Ladite composition d'encollage ne contient en outre aucun acide organique polycarboxylique de masse molaire inférieur à 1000, et de préférence est totalement exempt d'acide organique polycarboxylique.

Pour atteindre ce but, la présente invention propose une composition d'encollage, qui comprend
- au moins un sucre non réducteur, et
- au moins un sel métallique d'acide inorganique choisi parmi les sels de métal alcalin, de métal alcalino-terreux, de métal de transition ou de métal pauvre d'acide inorganique.

L'expression « sucre non réducteur » doit être entendue au sens conventionnel, à savoir un sucre constitué de plusieurs motifs saccharidiques dont le carbone 1 porteur du groupe OH hémiacétalique est engagé dans une liaison.

Le sucre non réducteur conforme à la présente invention est un oligoholoside non réducteur renfermant au plus 10 motifs saccharidiques.

A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose.

On préfère le saccharose et le tréhalose, et mieux encore le saccharose.

Le sel métallique d'acide inorganique réagit avec le sucre non réducteur sous l'effet de la chaleur pour former un réseau polymérique qui constitue le liant final. Le réseau polymérique ainsi formé permet d'établir des liaisons au niveau des points de jonction des fibres dans la laine minérale.

Comme déjà indiqué, le sel métallique d'acide inorganique est choisi parmi les sels de métal alcalin, de métal alcalino-terreux, de métal de transition ou de métal pauvre d'acide inorganique. De préférence, il s'agit d'un sel de sodium, de magnésium, de fer, de cobalt, de nickel, de cuivre, de zinc ou d'aluminium, avantageusement d'aluminium ou de cuivre.

Le sel métallique d'acide inorganique est avantageusement choisi parmi les sulfates, les chlorures, les nitrates, les phosphates et les carbonates, et mieux encore parmi les sulfates et les chlorures.

On préfère le sulfate d'aluminium, le sulfate de cuivre, le sulfate double d'aluminium et de potassium (ou alun de potassium) et le chlorure d'aluminium, en particulier le sulfate d'aluminium et le sulfate de cuivre.

Dans la composition d'encollage, le sel métallique d'acide inorganique représente 1 à 30 % en poids du poids total du mélange constitué par le sucre non réducteur et le sel métallique d'acide inorganique, de préférence 3 à 20 %, et avantageusement 5 à 15 %.

La composition d'encollage conforme à l'invention peut encore comprendre les additifs conventionnels ci-après dans les proportions suivantes calculées sur la base de 100 parts en poids de sucre non réducteur et de sel métallique d'acide inorganique :
- 0 à 2 parts de silane, en particulier un aminosilane,
- 0 à 20 parts d'huile, de préférence 4 à 15 parts,
- 0 à 20 parts de glycérol, de préférence 0 à 10 parts,
- 0 à 5 parts d'un silicone,
- 0 à 30 parts d'un « extendeur ».

Le rôle des additifs est connu et brièvement rappelé : le silane est un agent de couplage entre les fibres et le liant, qui joue également le rôle d'agent anti-vieillissement ; les huiles sont des agents anti-poussières et hydrophobes ; le glycérol joue le rôle de plastifiant et permet d'éviter la prégélification de la composition d'encollage ; le silicone est un agent hydrophobe qui a pour fonction de réduire l'absorption d'eau par le produit d'isolation ; l'« extendeur » est une charge organique ou inorganique, soluble ou dispersable dans la composition d'encollage aqueuse qui permet notamment de diminuer le coût de la composition d'encollage.

La composition d'encollage présente un pH qui varie dans une large mesure selon la nature du sel métallique d'acide inorganique utilisé, en général de 2 à 10, avantageusement acide, notamment inférieur ou égal à 6.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température de l'ordre de 100 à 200°C, généralement à une température comparable à celle d'une résine formophénolique classique, notamment supérieure ou égale à 110°C, de préférence inférieure ou égale à 170°.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

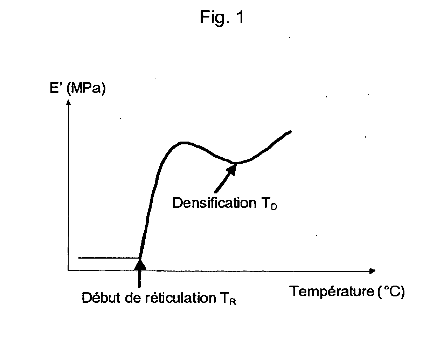

Dans ces exemples, on mesure :
- la température de début de réticulation (T_{R}) et la température de densification (T_{D}) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 40 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe les valeurs de température, en °C, de début de réticulation (T_{R}), correspondant à la première augmentation du module d'élasticité E', et de densification du réseau polymérique (T_{D}), correspondant à la deuxième augmentation du module d'élasticité E', si celle-ci existe.
- la viscosité, exprimée en mPa.s, à l'aide d'un rhéomètre de type rotationnel plan-plan avec un cisaillement de 100 s⁻¹, à 25°C. L'échantillon a une teneur en matières solides égale à 30 % en poids.
- l'angle de contact de la composition d'encollage, à 30 % en poids de matières solides, sur un support en verre.
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).
- l'épaisseur initiale du produit d'isolation et l'épaisseur après 1 heure, 24 heures et 30 jours sous compression avec un taux de compression (défini comme étant le rapport de l'épaisseur nominale à l'épaisseur sous compression) égal à 4,8/1. Les mesures d'épaisseur permettent d'évaluer la bonne tenue dimensionnelle du produit.
- le coefficient de conductivité thermique λ selon la norme EN 13162, exprimé en W/(m x K).

### EXEMPLES 1 A 6

On prépare des compositions d'encollage comprenant les constituants figurant dans le tableau 1, les quantités étant exprimées en parts pondérales.

Les compositions d'encollage sont préparées en introduisant successivement, dans un récipient contenant de l'eau, le sucre non réducteur ou réducteur, le sel métallique d'acide inorganique sous une agitation vigoureuse jusqu'à dissolution complète des constituants.

Les propriétés des compositions d'encollage figurant dans le tableau 1 sont en outre évaluées comparativement à une composition d'encollage classique renfermant une résine formophénolique et de l'urée (Référence) préparée conformément à l'exemple 2, essai 1 de WO 01/96254 A1.

Les compositions d'encollage des exemples 1 à 2 conformes à l'invention présentent une température de densification (T_{D}) du réseau polymérique plus faible que celle des exemples comparatifs 3 et 4 renfermant du glucose : la différence de température est de 26°C dans le cas du sulfate d'aluminium (exemples 1 et 3) et de 13°C dans le cas du sulfate de cuivre (exemples 2 et 4).

Les autres propriétés des exemples 1 et 2 sont similaires aux exemples comparatifs 3 et 4, notamment la viscosité et l'angle de contact conservent des valeurs faibles ce qui autorise une bonne application sur les fibres minérales, notamment par pulvérisation.

La température de début de réticulation (T_{R}) des exemples 1 et 2 est nettement plus faible que celle des exemples comparatifs 5 et 6 qui ne renferment pas de sel métallique d'acide inorganique. Cette température est également plus faible que celle de la résine phénolique (Référence).

### EXEMPLES 7 ET 8

Ces exemples illustrent la fabrication de produits isolants sur une ligne pilote.

On utilise les compositions d'encollage des exemples 2 et 4 comparatif auxquelles on ajoute les additifs suivants, pour 100 parts en poids de sucre et de sulfate de cuivre : 1 part de γ-aminopropyltriéthoxsilane et 8 parts d'une huile minérale. Ces compositions d'encollage constituent les exemples 7 et 8 (comparatif), respectivement.

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande de 2,4 m de large équipé de caissons d'aspiration internes qui retiennent la laine minérale sous forme d'une nappe à la surface du convoyeur. La nappe passe en continu dans une étuve maintenue à 270°C où les constituants de l'encollage polymérisent pour former un liant. Le produit d'isolation final a une densité nominale égale à 17,5 kg/m³.

Lors de la fabrication du produit d'isolation, les émissions d'azote au niveau de la cheminée sont restées à un niveau minimal.

Les produits d'isolation présentent les propriétés suivantes :

| | **Ex. 7** | **Ex. 8 (comp.)** |
|---|---|---|
| **Résistance en traction (N)** | | |
| avant vieillissement | 3,0 | 2,3 |
| après vieillissement | 2,8 | 2,2 |
| **Epaisseur (mm)** | | |
| après 1 heure | 108 | 110 |
| après 24 heures | 105 | 104 |
| après 30 jours | 105 | 104 |
| **Perte au feu (%)** | 5,6 | 5,1 |
| **λ (W/(m x K)** | 0,035 | 0,035 |

Le produit d'isolation selon l'exemple 7 est stable en épaisseur et il présente une meilleure résistance en traction que le produit de l'exemple 8 renfermant du glucose : le gain est de 30 % avant vieillissement et de 27 % après vieillissement.

### EXEMPLES 9 A 12

On prépare des compositions d'encollage dans les conditions des exemples 1 à 6 renfermant les constituants figurant dans le tableau 2, les quantités étant exprimées en parts pondérales.

**Tableau 1**

| Exemple | 1 | 2 | 3 (Comp.) | 4 (Comp.) | 5 (Comp.) | 6 (Comp.) | Référence |
|---|---|---|---|---|---|---|---|
| **Composition d'encollage** | | | | | | | |
| Saccharose | 85 | 85 | - | - | 100 | - | - |
| Glucose | - | - | 85 | 85 | - | 100 | - |
| Sulfate d'aluminium | 15 | - | 15 | - | - | - | - |
| Sulfate de cuivre | - | 15 | - | 15 | - | - | - |
| **Propriétés** | | | | | | | |
| Temp. début réticulationT_{R} (°C) | 104 | 110 | 102 | 111 | 233 | 228 | 151 |
| Temp. de densification T_{D} (°C) | 177 | 187 | 203 | 200 | - | - | - |
| Viscosité (mPa.s) | 6,1 | 5,1 | 5,6 | 6,1 | 5,1 | 5,2 | 8,0 |
| Angle de contact (°) | 27 | 27 | 28 | 31 | 22 | 27 | 10 |
| pH⁽¹⁾ | 2,9 | 3,2 | 3,0 | 3,3 | 7,5 | 6,9 | 6,0 |

| | | | | | | | |
|---|---|---|---|---|---|---|---|
| ⁽¹⁾ teneur en matières solides : 30 % | | | | | | | |

**Tableau 2**

| Exemple | 9 | 10 | 11 | 12 |
|---|---|---|---|---|
| **Composition d'encollage** | | | | |
| Tréhalose | 85 | 85 | - | - |
| Mélézitose | - | - | 85 | 85 |
| Sulfate d'aluminium | 15 | - | 15 | - |
| Sulfate de cuivre | - | 15 | - | 15 |
| **Propriétés** | | | | |
| Temp. début réticulationT_{R}(°C) | 99 | 83 | 102 | 82 |
| Temp. de densification T_{D} (°C) | 172 | 153 | 190 | 123 |
| Viscosité (mPa.s) | 7,6 | 7,3 | 7,2 | 7,4 |
| Angle de contact (°) | 26 | 31 | 18 | 19 |
| pH⁽¹⁾ | 3,0 | 4,0 | 3,1 | 4,3 |

| | | | | |
|---|---|---|---|---|
| ⁽¹⁾ teneur en matières solides : 30 % | | | | |

## Revendications

1. Composition d'encollage exempte de formaldéhyde, de composés azotés et d'acide organique polycarboxylique, pour des produits isolants à base de laine minérale, notamment de roche ou de verre, **caractérisée en ce qu'**elle comprend
- au moins un sucre non réducteur, et
- au moins un sel métallique d'acide inorganique choisi parmi les sels de métal alcalin, de métal alcalino-terreux, de métal de transition ou de métal pauvre d'acide inorganique.

2. Composition selon la revendication 1, **caractérisée en ce que** le sucre non réducteur est un oligoholoside renfermant au plus 10 motifs saccharidiques.

3. Composition selon la revendication 2, **caractérisée en ce que** le sucre non réducteur est un di-, tri-, tétra- ou pentaholoside.

4. Composition selon l'une des revendications 1 à 3, **caractérisée en ce que** le sucre non réducteur est le tréhalose, les isotréhaloses, le saccharose, le mélézitose, le gentianose, le raffinose, l'erlose, l'umbelliférose, le stachyose ou le verbascose.

5. Composition selon l'une des revendications 1 à 4, **caractérisée en ce que** le sel métallique d'acide inorganique est un sel de sodium, de magnésium, de fer, de cobalt, de nickel, de cuivre, de zinc ou d'aluminium, de préférence d'aluminium ou de cuivre.

6. Composition selon la revendication 5, **caractérisée en ce que** le sel métallique d'acide inorganique est choisi parmi les sulfates, les chlorures, les nitrates, les phosphates et les carbonates, de préférence les sulfates et les chlorures.

7. Composition selon la revendication 5 ou 6, **caractérisée en ce que** le sel métallique d'acide inorganique est le sulfate d'aluminium, le sulfate de cuivre, le sulfate double d'aluminium et de potassium (ou alun de potassium) et le chlorure d'aluminium, de préférence le sulfate d'aluminium et le sulfate de cuivre.

8. Composition selon l'une des revendications 1 à 7, **caractérisée en ce que** le sel métallique d'acide inorganique représente 1 à 30 % en poids du poids total du mélange constitué par le sucre non réducteur et le sel métallique d'acide inorganique, de préférence 3 à 20 %, et avantageusement 5 à 15 %.

9. Composition selon l'une des revendications 1 à 8, **caractérisée en ce qu'**elle comprend en outre les additifs ci-après dans les proportions suivantes calculées sur la base de 100 parts en poids de sucre non réducteur et de sel métallique d'acide inorganique :
- 0 à 2 parts de silane,
- 0 à 20 parts d'huile, de préférence 4 à 15 parts,
- 0 à 20 parts de glycérol, de préférence 0 à 10 parts,
- 0 à 5 parts d'un silicone,
- 0 à 30 parts d'un « extendeur ».

10. Produit isolant acoustique et/ou thermique à base laine minérale, notamment de verre ou de roche, encollée à l'aide de la composition d'encollage selon l'une des revendications 1 à 9.

11. Voile de fibres minérales, notamment de verre ou de roche, encollées à l'aide de la composition d'encollage selon l'une des revendications 1 à 9.

12. Procédé de fabrication d'un produit isolant acoustique et/ou thermique à base de laine minérale selon la revendication 10 ou d'un voile de fibres minérales selon la revendication 11, selon lequel on fabrique la laine minérale ou les fibres minérales, on projette sur ladite laine ou lesdites fibres une composition d'encollage et on traite ladite laine ou lesdites fibres à une température permettant la réticulation de l'encollage et la formation d'un liant infusible, **caractérisé en ce que** la composition d'encollage comprend
- au moins un sucre non réducteur, et
- au moins un sel métallique d'acide inorganique choisi parmi les sels de métal alcalin, de métal alcalino-terreux, de métal de transition ou de métal pauvre d'acide inorganique.

## Patentansprüche

1. Bindemittelzusammensetzung, frei von Formaldehyd, Stickstoffverbindungen und organischen Polycarbonsäuren, für Dämmprodukte auf Basis von Mineralwolle, insbesondere Steinwolle oder Glaswolle, **dadurch gekennzeichnet, dass** sie enthält:
- wenigstens einen nicht reduzierenden Zucker; und
- wenigstens ein Metallsalz einer anorganischen Säure, ausgewählt aus den Salzen anorganischer Säuren der Alkalimetalle, der Erdalkalimetalle, der Übergangsmetalle oder den Metallen aus dem p-Block des Periodensystems (metal pauvre).

2. Zusammensetzung nach Anspruch 1, **dadurch gekennzeichnet, dass** der nicht reduzierende Zucker ein Oligosaccharid ist, welches höchstens 10 Saccharidmotive enthält.

3. Zusammensetzung nach Anspruch 2, **dadurch gekennzeichnet, dass** der nicht reduzierende Zucker ein Di-, Tri-, Tetra- oder Pentasaccharid ist.

4. Zusammensetzung nach einem der Ansprüche 1 bis 3, **dadurch gekennzeichnet, dass** der nicht reduzierende Zucker Trehalose, Isotrehalose, Saccharose, Melezitose, Gentianose, Raffinose, Erlose, Umbelliferose, Stachyose oder Verbascose ist.

5. Zusammensetzung nach einem der Ansprüche 1 bis 4, **dadurch gekennzeichnet, dass** das Metallsalz der anorganischen Säure ein Salz des Natriums, des Magnesiums, des Eisens, des Kobalts, des Nickels, des Kupfers, des Zinks oder des Aluminiums, vorzugsweise des Aluminiums oder des Kupfers, ist.

6. Zusammensetzung nach Anspruch 5, **dadurch gekennzeichnet, dass** das Metallsalz der anorganischen Säure ausgewählt wird aus Sulfaten, Chloriden, Nitraten, Phosphaten und Carbonaten, vorzugsweise Sulfaten und Chloriden.

7. Zusammensetzung nach Anspruch 5 oder 6, **dadurch gekennzeichnet, dass** das Metallsalz der anorganischen Säure Aluminiumsulfat, Kupfersulfat, ein Doppelsulfat des Aluminiums und des Kaliums (oder Kaliumalaun) und Aluminiumchlorid, vorzugsweise Aluminiumsulfat und Kupfersulfat, ist.

8. Zusammensetzung nach einem der Ansprüche 1 bis 7, **dadurch gekennzeichnet, dass** das Metallsalz der anorganischen Säure 1 bis 30 Gew.-%, bezogen auf das Gesamtgewicht der Mischung, zusammengesetzt aus dem nicht reduzierenden Zucker und dem Metallsalz der anorganischen Säure, beträgt, vorzugsweise 3 bis 20 % und besonders bevorzugt 5 bis 15 %.

9. Zusammensetzung nach einem der Ansprüche 1 bis 8, **dadurch gekennzeichnet, dass** sie die nachfolgenden zusätzlichen Additive enthält, in den folgenden Anteilen, berechnet auf Basis von 100 Gewichtsteilen nicht reduzierendem Zucker und dem Metallsalz der anorganischen Säure:
- 0 bis 2 Teile Silan,
- 0 bis 20 Teile Öl, vorzugsweise 4 bis 15 Teile,
- 0 bis 20 Teile Glycerin, vorzugsweise 0 bis 10 Teile,
- 0 bis 5 Teile eines Silikons,
- 0 bis 30 Teile eines Füllstoffs ("extendeur").

10. Schall- und/oder Wärmedämmprodukt auf Basis von Mineralwolle, insbesondere Glaswolle oder Steinwolle, gebunden mit Hilfe der Bindemittelzusammensetzung gemäß einem der Ansprüche 1 bis 9.

11. Mineralfaservlies, insbesondere Glas- oder Steinvlies, gebunden mit Hilfe der Bindemittelzusammensetzung gemäß einem der Ansprüche 1 bis 9.

12. Verfahren zur Herstellung eines Schall- und/oder Dämmstoffprodukts auf Basis von Mineralwolle gemäß Anspruch 10 oder eines Mineralfaservlieses gemäß Anspruch 11, wobei man die Mineralwolle oder die Mineralfasern herstellt, auf die Wolle oder besagte Fasern eine Bindemittelzusammensetzung aufsprüht und die Wolle oder besagte Fasern bei einer Temperatur behandelt, welche die Vernetzung des Bindemittels sowie die Bildung eines unschmelzbaren Binders erlaubt, **dadurch gekennzeichnet, dass** die Bindemittelzusammensetzung
- wenigstens einen nicht reduzierenden Zucker, und
- wenigstens ein Metallsalz einer anorganischen Säure enthält, welches ausgewählt ist aus den Salzen anorganischer Säuren der Alkalimetalle, der Erdalkalimetalle, der Übergangsmetalle oder den Metallen des p-Blocks des Periodensystems (metal pauvre).

## Claims

1. A sizing composition devoid of formaldehyde, of nitrogenous compounds and of organic polycarboxylic acid for insulating products based on mineral wool, in particular of rock or of glass, **characterized in that** it comprises:
- at least one non-reducing sugar, and
- at least one inorganic acid metal salt chosen from inorganic acid alkali metal, alkaline earth metal, transition metal or poor metal salts.

2. The composition as claimed in claim 1, **characterized in that** the non-reducing sugar is an oligosaccharide including at most 10 saccharide units.

3. The composition as claimed in claim 2, **characterized in that** the non-reducing sugar is a di-, tri-, tetra- or pentasaccharide.

4. The composition as claimed in one of claims 1 to 3, **characterized in that** the non-reducing sugar is trehalose, isotrehaloses, sucrose, melezitose, gentianose, raffinose, erlose, umbelliferose, stachyose or verbascose.

5. The composition as claimed in one of claims 1 to 4, **characterized in that** the inorganic acid metal salt is a sodium, magnesium, iron, cobalt, nickel, copper, zinc or aluminum salt, preferably an aluminum or copper salt.

6. The composition as claimed in claim 5, **characterized in that** the inorganic acid metal salt is chosen from sulfates, chlorides, nitrates, phosphates and carbonates, preferably sulfates and chlorides.

7. The composition as claimed in claim 5 or 6, **characterized in that** the inorganic acid metal salt is aluminum sulfate, copper sulfate, potassium aluminum sulfate (or potassium alum) and aluminum chloride, preferably aluminum sulfate and copper sulfate.

8. The composition as claimed in one of claims 1 or 7, **characterized in that** the inorganic acid metal salt represents from 1 to 30% by weight of the total weight of the mixture composed of the non-reducing sugar and the inorganic acid metal salt, preferably from 3 to 20% and advantageously from 5 to 15%.

9. The composition as claimed in one of claims 1 to 8, **characterized in that** it additionally comprises the additives below in the following proportions, calculated on the basis of 100 parts by weight of non-reducing sugar and of inorganic acid metal salt:
- from 0 to 2 parts of silane,
- from 0 to 20 parts of oil, preferably from 4 to 15 parts,
- from 0 to 20 parts of glycerol, preferably from 0 to 10 parts,
- from 0 to 5 parts of a silicone,
- from 0 to 30 parts of an "extender".

10. An acoustic and/or thermal insulating product based on mineral wool, in particular of glass or of rock, sized using the sizing composition as claimed in one of claims 1 to 9.

11. A veil of mineral fibers, in particular of glass or of rock, sized using the sizing composition as claimed in one of claims 1 to 9.

12. A process for the manufacture of an acoustic and/or thermal insulating product based on mineral wool as claimed in claim 10 or of a veil of mineral fibers as claimed in claim 11, according to which the mineral wool or the mineral fibers are manufactured, a sizing composition is projected onto said wool or said fibers and said wool or said fibers is/are treated at a temperature which makes possible the crosslinking of the size and the formation of an infusible binder, **characterized in that** the sizing composition comprises:
- at least one non-reducing sugar, and
- at least one inorganic acid metal salt chosen from inorganic acid alkali metal, alkaline earth metal, transition metal or poor metal salts.
